# EUROPEAN PATENT APPLICATION

(11) **EP 4 636 738 A1**
(43) Date of publication of application: **22.10.2025**
(21) Application number: 22969333.8
(22) Date of filing: 23.12.2022
(51) Int. Cl.: G09F 9/30, G09F 11/02, H02G 11/02, H01R 39/18, F16H 19/04

(54) **UNMANNED GUIDANCE TERMINAL**

(71) Applicant: LG Electronics Inc., Yeongdeungpo-gu Seoul 07336 (KR)
(72) Inventor: KIM, Youngwoo, Seoul 06772 (KR); LEE, Seungdon, Seoul 06772 (KR); CHOI, Hongyoul, Seoul 06772 (KR)
(74) Representative: Schott, Jakob Valentin
(86) International application number: PCT/KR2022/021151
(87) International publication number: WO 2024/135899

(57) **Abstract**

This unmanned guidance terminal comprises: a base; a main body part rotatably coupled onto the base; a rotating part for rotating the main body part; a vertical frame extending upward from the main body part; a display coupled to the vertical frame; and a controller located on the main body part and controlling information outputted on the display and the rotating part. The unmanned guidance terminal will make it easy for anyone to find his or her destination in a complicated complex space, and will be able to provide intuitive guidance especially to the digitally vulnerable.

## Description

### [Technical Field]

The present disclosure relates to an unmanned guidance terminal capable of providing intuitive guidance to a user by applying augmented reality.

### [Background]

An unmanned terminal is an unmanned system installed in a public place, and is a system for providing information or a service to a user without face-to-face contact. It is also called a kiosk and is installed in a government agency, a financial institution, a department store, an airport, an exhibition hall, a restaurant, and the like to issue various documents, provide information, and receive orders, so that the user is able to receive the desired service without any residing staff.

The unmanned terminal has an advantage of low maintenance costs because it does not use manpower, but it is not intuitive and thus causes difficulties in providing sufficient assistance when being used, so that a person for guidance may be needed in some cases.

In particular, when providing directions in a large complex space such as the airport and a shopping mall, indicating a location on a two-dimensional graphic map may lead to difficulties. In particular, as the large complex space becomes more sophisticated, complexity of finding directions is further increasing. It is difficult for anyone without excellent spatial perception to find the directions easily, so that guidance from the person for guidance is necessary, and such an inconvenient experience negatively affects a perception of the corresponding space.

Especially for the elderly and children, it is difficult to use such an unmanned terminal, so that the person for guidance should be hired and placed separately from the unmanned terminal. Therefore, there is a need for a more intuitive and easy-to-use guidance system.

### [Summary]

### [Technical Problem]

The present disclosure is intended to provide an unmanned guidance terminal that may provide intuitive guidance to a user by applying augmented reality as described above.

### [Technical Solutions]

Provided is an unmanned guidance terminal including a base, a main body rotatably coupled onto the base, a rotator that rotates the main body, a vertical frame extending upward from the main body, a display coupled to the vertical frame, and a controller that is positioned on the main body and controls information output on the display and the rotator.

The rotator may include a circular rack gear formed on the base, a pinion gear rotatably coupled to the main body and meshed with the circular rack gear, and a motor that provides a driving force to the pinion gear.

The pinion gear may include a plurality of pinion gears arranged to be spaced apart from each other by a predetermined distance, and the motor may include a motor gear meshed with one of the plurality of pinion gears.

The base may further include a base wall spaced apart from the rack gear by a predetermined distance and located on an outer circumference of the pinion gear, and the main body may include a circular bottom plate having the rotator located on a bottom surface thereof, wherein the vertical frame and the controller are coupled to a top surface of the circular bottom plate, and a bottom bracket located under the bottom plate and fastened to the base wall.

The display may be a transparent display allowing light to pass therethrough, and the controller may output a guide for guiding a location of a place inquired by a user on one surface of the transparent display, and operate the rotator such that a surface opposite to the one surface of the transparent display faces the place.

The unmanned guidance terminal may further include a light outputter that is positioned on the main body and indicates a location of the one surface of the transparent display.

The unmanned guidance terminal may further include a sensor that senses a user adjacent to the unmanned guidance terminal, and the controller may control the rotator such that one surface of the display where a screen is output is oriented in a direction where the user is positioned.

The unmanned guidance terminal may further include a circular power supply terminal positioned on the base, and a brush terminal positioned on the main body and maintaining contact with the power supply terminal when the main body rotates, and the controller may receive power via the brush terminal.

The unmanned guidance terminal may further include a linear actuator that moves the display vertically along the vertical frame, and a flexible cable positioned on the vertical frame and connecting the display with the controller.

The unmanned guidance terminal may further include a cable reel that winds the flexible cable when the display descends to maintain tension on the flexible cable positioned on the vertical frame.

The unmanned guidance terminal may further include a sensor that senses a user adjacent to the unmanned guidance terminal, and the controller may control the linear actuator to move the display to a location corresponding to a height or an eye location of the user sensed by the sensor.

The sensor may be a camera module located upward of the display.

The vertical frame may include a first vertical frame located on one side of the display and having the linear actuator coupled thereto, and a second vertical frame located on a side opposite to the one side of the display and having the flexible cable disposed thereon.

The vertical frame may be located on one side of the display and have the linear actuator and the flexible cable disposed thereon.

The main body may include a main body cover having an inclined surface formed on a top surface thereof.

According to another aspect of the present disclosure, provided is an unmanned guidance terminal including a main body, a vertical frame extending upward from the main body, a transparent display coupled to the vertical frame, and a controller that is positioned on the main body and controls the transparent display to provide guidance information.

The controller may output a guide for guiding a location of a place inquired by a user on one surface of the transparent display, and the unmanned guidance terminal may include a light outputter that is positioned on the main body and indicates a location of the one surface of the transparent display.

The unmanned guidance terminal may further include a linear actuator that moves the transparent display vertically along the vertical frame.

The unmanned guidance terminal may further include a sensor that senses a user adjacent to the unmanned guidance terminal, and the controller may control the linear actuator to move the transparent display to a location corresponding to a height or an eye location of the user sensed by the sensor.

The unmanned guidance terminal may further include a flexible cable positioned on the vertical frame and connecting the display with the controller, and a cable reel that winds the flexible cable when the transparent display descends to maintain tension on the flexible cable positioned on the vertical frame.

### [Advantageous Effects]

According to at least one embodiment of the present disclosure, anyone may easily find the destination in the complex space, and especially, the intuitive guidance may be provided to the digitally vulnerable.

The present disclosure may contribute to smooth airport operation by allowing the user to move to the destination that should be reached on time, such as an airport boarding gate, without delay.

In the case of the complex shopping mall, more customer touch points may be obtained and a stay time and customer transaction may be increased by minimizing time and physical exertion of visitors.

The effects obtainable from the present disclosure are not limited by the above mentioned effects, and other unmentioned effects can be clearly understood from the above description by those having ordinary skill in the technical field to which the present disclosure pertains.

### [Brief Description of the Drawings]

FIG. 1 is a diagram illustrating an unmanned guidance terminal according to an embodiment of the present disclosure.
FIG. 2 is a diagram illustrating an embodiment of a screen provided by an unmanned guidance terminal according to an embodiment of the present disclosure.
FIG. 3 is a diagram illustrating a change in a vertical level of an unmanned guidance terminal according to an embodiment of the present disclosure.
FIG. 4 is a diagram illustrating an unmanned guidance terminal according to another embodiment of the present disclosure.
FIG. 5 is a diagram illustrating a state in which a casing of an unmanned guidance terminal according to an embodiment of the present disclosure is removed.
FIG. 6 is a diagram illustrating a lower structure of an unmanned guidance terminal according to an embodiment of the present disclosure.
FIG. 7 is a cross-sectional view taken along a line A-A in FIG. 5.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

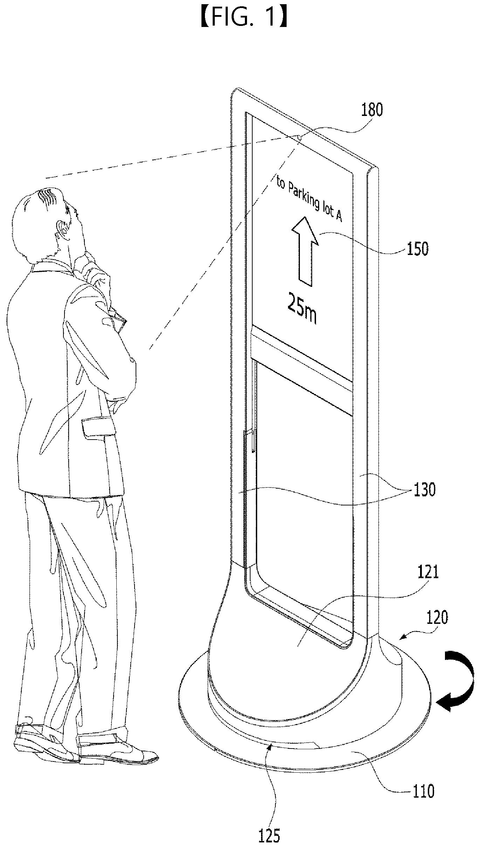

FIG. 1 is a diagram illustrating an unmanned guidance terminal 100 according to an embodiment of the present disclosure. The unmanned guidance terminal 100 of the present disclosure is installed in a large complex space such as an airport and a complex shopping mall and provides location information to a user when the user inquires about a specific location.

The unmanned guidance terminal 100 of the present disclosure includes, as basic components, a main body 120 located at a bottom, a vertical frame 130 extending upward from the main body 120, and a display 150 coupled to the vertical frame 130.

The main body 120 may have an inclined surface on a top surface of a main body cover 121 to prevent dust from accumulating and an object from being loaded. The vertical frame 130 may extend upward from the main body 120 and may be coupled to a side surface of the display 150.

Portions of the vertical frame 130 may be connected to each other at a top as shown in FIG. 1, so that the vertical frame 130 may be prevented from being bent and damaged while protecting an upper side of the display 150.

The display 150 may provide the location information to the user. When the user requests the location information for a desired place, the location may be output on the display 150. The typical unmanned guidance terminal 100 displays a location of a destination on a map, but it is generally difficult to derive a movement route from a current location unless one has excellent spatial perception.

In particular, when a layout of the map and a direction in which the user is standing do not match, the user has difficulties in recognizing an exact direction. Rather, the exact direction is more clearly recognized when receiving a verbal explanation of the movement route from a person for guidance, so that actual utilization of the unmanned guidance terminal 100 is not high.

In addition, there are problems of increased cost and limited installation location because of a great size of the unmanned guidance terminal 100 in providing the map for the large space of the complex shopping mall.

Accordingly, the unmanned guidance terminal 100 of the present disclosure may provide a directional indication and a guidance comment that guide the route within an actual field of view of the user using the transparent display 150.

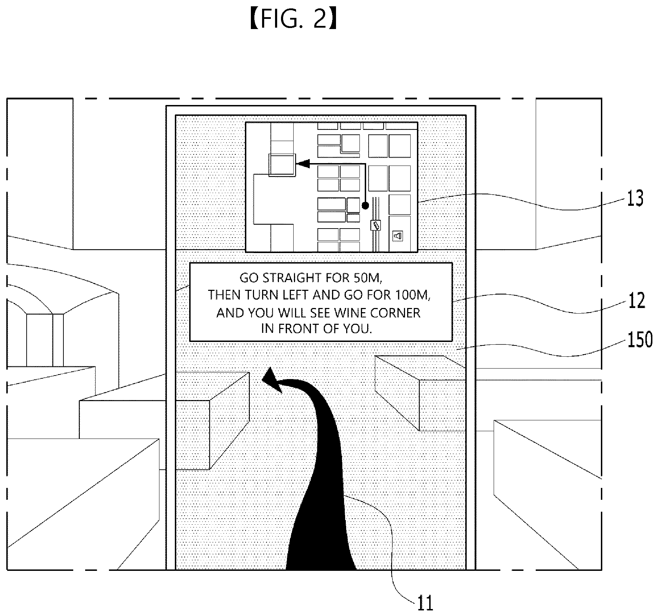

FIG. 2 is a diagram illustrating an example of information provided via a screen of the unmanned guidance terminal 100 of the present disclosure. Because a scene on an opposite side is visible via the transparent display 150, a route 11 may be visually superimposed on the scene visible from the actual field of view of the user.

Augmented reality may provide an effect similar to a guide arrow marked on ground at a branching road, and the user may visually recognize the exact route.

In addition, a guide comment 12 that guides a location that is not visible from the field of view may be output together or provided as a voice, thereby obtaining an effect similar to the actual person for guidance explaining how to find the location.

To provide accurate guidance for a location that is not visible from the current location, only a map 13 from the current location to the destination may be provided separately. In this regard, the map rotated to match a direction of the display 150, that is, a direction of user's gaze is provided.

Because such a screen is able to provide information on the exact direction only when the display 150 is oriented in a direction in which the user is moving, the main body 120 may rotate to change the direction of the display 150.

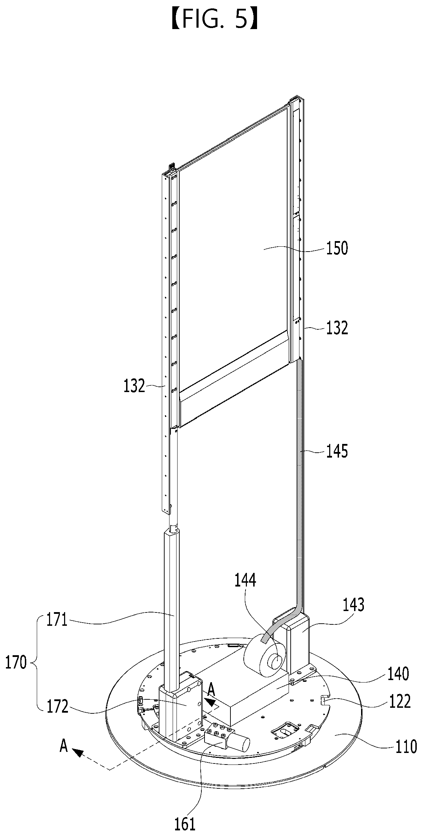

The main body 120 may rotate and change the direction of the vertical frame 130 and the display 150 located at the top, and may include a rotator 160 (see FIG. 5) that rotates the main body 120 between a base 110 fixed to the floor and the main body 120 for the rotation of the main body 120.

Because distinction between a front surface and a rear surface of the transparent display 150 is unclear because of transparency, a light outputter 125 that indicates a direction of one surface of the display 150 may be further included to indicate the one surface of the display 150 where the information is output to the user.

The rotator 160 may not only rotate to orient the transparent display 150 in a direction corresponding to the information output on the display 150, but may also switch the direction of the main body 120 such that the user is positioned to face the front surface (a surface where the information is output) of the display 150.

A sensor may sense the user adjacent to the unmanned guidance terminal 100, and when the user is oriented in a direction other than a direction of the front surface of the display 150, a controller 140 may operate the rotator 160 such that the front surface of the transparent display 150 faces the user.

In the present embodiment, the light outputter 125 is illustrated as being located at a bottom of the main body, but it may also be located at the vertical frame 130 or at an upper frame connecting upper ends of the vertical frame 130 to each other.

Because the augmented reality outputs the information so as to be superimposed on the scene viewed from a user's perspective, it is necessary to first identify the user's gaze to provide accurate information.

Because the users of the unmanned guidance terminal 100 have different heights, they have different eye levels and thus have different fields of view. Therefore, it is necessary to provide the information based on the user's field of view via a sensor 180 that recognizes the user's height or eyes.

When a size of the display 150 is sufficiently great, a location of the arrow output may vary depending on the height. Alternatively, a vertical location of the display 150 may be changed to provide user-customized information.

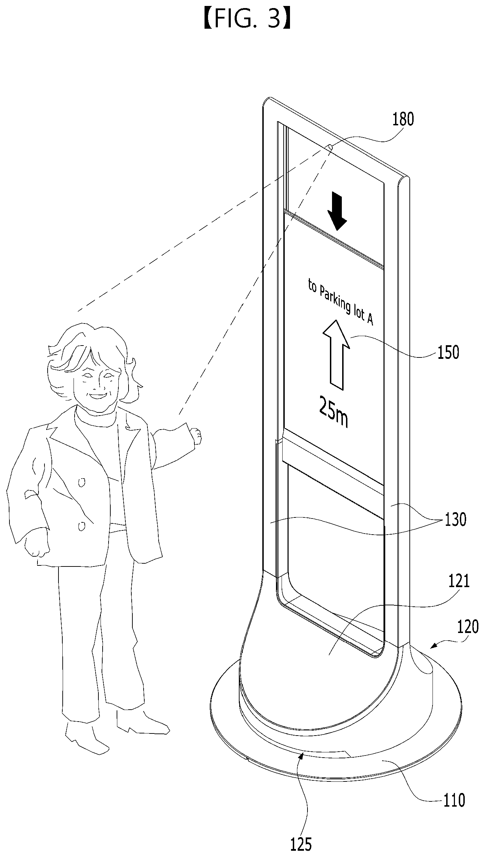

FIG. 3 is a diagram illustrating a change in a vertical level of the unmanned guidance terminal 100 according to an embodiment of the present disclosure. As shown in FIG. 3, the display 150 may move vertically along the vertical frame 130 to adjust the vertical level thereof based on the user's height.

The sensor 180 senses the user's height or the location of the eyes and provides the same to the controller 140, and the controller 140 changes the location of the display 150 using a linear actuator 170 to place the display 150 at a location corresponding to the sensed height or location of the eyes.

The sensor 180 may be a general RGB camera, or may use an infrared camera, a distance sensor, or the like for recognizing a user's shape. When the general camera is used, it may also be used for a function of video call with an administrator.

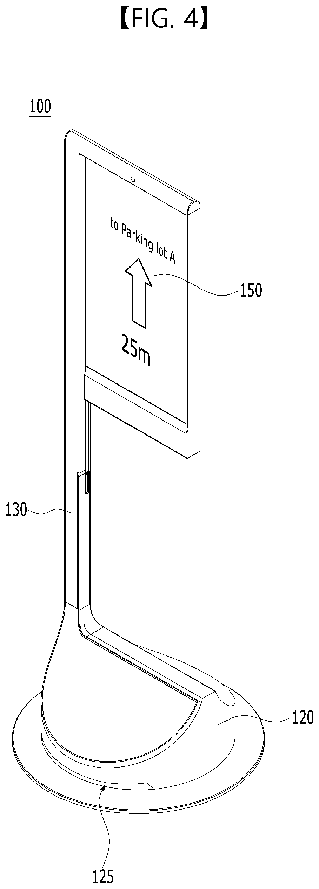

FIG. 4 is a diagram illustrating the unmanned guidance terminal 100 according to another embodiment of the present disclosure.

A pair of vertical frames 130 are disposed in the embodiment in FIGS. 1 and FIG. 3, but the unmanned guidance terminal 100 of the present embodiment may have the vertical frame 130 positioned only on one side of the display 150.

As described above, a rotator motor 161 may rotate the main body 120 on the base 110 or rotate the same using the vertical frame 130 as a shaft.

Hereinafter, a configuration of the unmanned guidance terminal 100 of the present disclosure will be described in more detail with reference to FIGS. 5 to 7.

FIG. 5 is a diagram illustrating a state in which a casing of the unmanned guidance terminal 100 according to an embodiment of the present disclosure is removed. FIG. 5 is a diagram illustrating a state in which a cover of the vertical frame 130 and the main body cover 121 of the main body 120 are removed. The vertical frame 130 includes a vertical beam made of a metal material for rigidity therein.

The display 150 may be positioned between a pair of vertical beams 132, and the display 150 may move vertically between the vertical beams 132. In the embodiment in FIG. 4, the display 150 may move vertically by being coupled to the vertical beam 132 on one side thereof.

In the case of having the pair of vertical beams 132, the linear actuator 170 for operating the display 150 vertically may be positioned on a first vertical beam 132 on one side, and a flexible cable 145 for operating the display 150 may be positioned on a second vertical beam 132 on the other side.

The linear actuator 170 located on the first vertical beam 132 may include a linear cylinder 171 having a variable length and a linear motor 172 that provides a driving force for the length change of the linear cylinder 171. The linear cylinder 171 may be formed in a multi-stage structure, and the linear motor 172 may sequentially extend or retract the stages of the multi-stage cylinder to change the location of the display 150.

The flexible cable 145 may vary in a length based on the vertical movement of the display 150. However, because there is a concern of breakage when the flexible cable 145 is folded or twisted inside the narrow vertical frame during the vertical movement, as shown in FIG. 5, a cable reel 144 that winds or unwinds the flexible cable 145 in correspondence with the movement of the display 150 may be further disposed.

The flexible cable 145 is wound around the cable reel 144 and a length thereof located on the vertical beam 132 decreases when the display 150 moves downward, and the flexible cable 145 is unwounded around the cable reel 144 and a vertical extension length thereof increases when the display 150 moves upward.

The flexible cable 145 located on the vertical beam 132 may be disposed in an unfolded state, that is, while maintaining tension, thereby reducing a risk of cable breakage resulted from the cable twisting or folding.

The controller 140 may be mounted on a bottom plate 122 of the main body 120. The controller 140 may be connected to the flexible cable 145 extending from the display 150 and be connected to the linear actuator 170 to control the location of the display 150.

The main body 120 may include the rotator motor 161 that is positioned on the base 110 fixed to the floor and rotates the main body 120 on the base 110. The rotator motor 161 may simultaneously rotate the main body 120, the vertical frame 130 positioned on the main body 120, and the display 150, and may be positioned between the bottom plate 122 and the base 110.

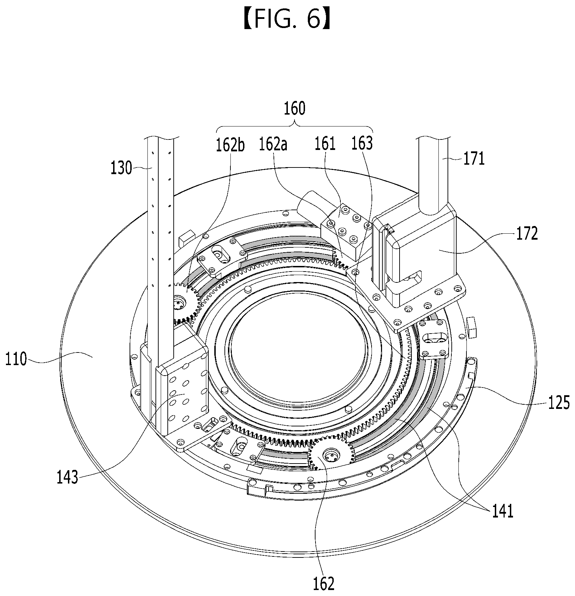

FIG. 6 is a diagram illustrating a lower structure of the unmanned guidance terminal 100 according to an embodiment of the present disclosure. The rotator motor 161 is illustrated with the bottom plate 122 and the controller 140 removed from the structure in FIG. 5.

The rotator motor 161 may be composed of a circular rack gear 163 formed on the base 110, a pinion gear 162 that is rotatably coupled to the bottom plate 122 of the main body 120 and meshes with the circular rack gear 163, and a motor that provides a driving force to the pinion gear 162.

The motor may be positioned on a top surface of the bottom plate 122, and may include a motor gear that extends through the bottom plate 122 and meshes with the pinion gear 162 located under the bottom plate 122.

The motor may further include an auxiliary gear (not shown) that changes a direction of a rotational force to transmit power to the pinion gear 162 that rotates around a vertical shaft when rotating around a horizontal shaft as illustrated in FIG. 6.

The pinion gear 162 may include a plurality of pinion gears along the circular rack gear 163 as shown in FIG. 6. When the motor is directly fastened to one of the pinion gears 162 and rotates the same, another pinion gear 162 may also rotate and move on the rack gear 163 based on the rotation of the main body 120.

The circular rack gear 163 induces a circular movement, that is, the rotation of the main body 120. The bottom plate 122 may be rotated by transmitting the rotational force of the motor to a spur gear and rotating a rotational shaft located at a center of the bottom plate 122, but the bottom plate 122 may rotate more stably without tilting of the main body 120 when being rotated using the circular rack gear.

The pinion gear 162 that rotates by meshing with the rack gear 163 having teeth formed outward is located under the bottom plate 122. The plurality of pinion gears 162 may be arranged along a circumference of the circular rack gear 163, and the rotator motor 161 may be fastened to one 162a of the pinion gears and transmit the driving force thereto.

A base wall 113 located on an outer circumference of the pinion gear 162 may be further included. The pinion gear 162 moves on a ring-shaped rail between the base wall 113 and the rack gear 163 to rotate the main body 120.

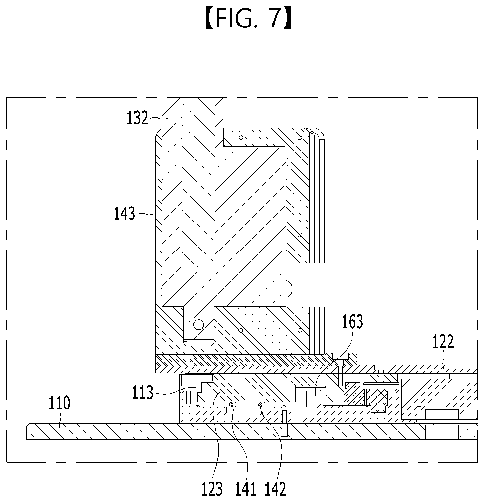

FIG. 7 is a cross-sectional view taken along a line A-A in FIG. 5, showing a power supply structure 141 and 142 for supplying power to the main body 120.

The main body 120 is rotatable by 360° and is also able to rotate continuously in the same direction. However, it is difficult to maintain connection with an external power source connected via the floor.

To solve the above problem, a circular power supply terminal 141 may be formed on the base 110, and a brush terminal 142 located on the main body 120 and moving along the circular power supply terminal 141 may be disposed.

The power supply terminal 141 may be located on a bottom surface of the rail between the rack gear and the base wall 113, and the bottom plate 122 may further include a bottom bracket 123 that protrudes in a direction of the power supply terminal 141 and is located on the ring-shaped rail.

The brush terminal 142 protrudes from a bottom surface of the bottom bracket 123 and has elasticity, so that it naturally deforms when the bottom plate 122 rotates and is able to maintain a state of being connected with the power supply terminal 141.

The brush terminal 142 may be connected to the controller 140 and may supply the power to the display 150, the linear motor 172, and the motor of the rotator motor 161.

The circular power supply terminal 141 may be located between a pair of circular rack gears 163. The circular power supply terminal 141 may include a pair of power supply terminals 141 with different diameters for +/- polarity.

An upper end of the base wall 113 may further include a protrusion that is fastened to the bottom bracket 123 such that the main body does not deviate from the base 110.

According to at least one embodiment of the present disclosure, anyone may easily find the destination in the complex space, and especially, the intuitive guidance may be provided to the digitally vulnerable.

The present disclosure may contribute to smooth airport operation by allowing the user to move to the destination that should be reached on time, such as an airport boarding gate, without delay.

In the case of the complex shopping mall, more customer touch points may be obtained and a stay time and customer transaction may be increased by minimizing time and physical exertion of visitors.

The above detailed description should not be construed as being limitative in all terms, but should be considered as being illustrative. The scope of the present disclosure should be determined by reasonable analysis of the accompanying claims, and all changes in the equivalent range of the present disclosure are included in the scope of the present disclosure.

## Claims

1. An unmanned guidance terminal comprising:
a base;
a main body rotatably coupled onto the base;
a rotator configured to rotate the main body;
a vertical frame extending upward from the main body;
a display coupled to the vertical frame; and
a controller positioned on the main body and configured to control information output on the display and the rotator.

2. The unmanned guidance terminal of claim 1, wherein the rotator includes:
a circular rack gear formed on the base;
a pinion gear rotatably coupled to the main body and meshed with the circular rack gear; and
a motor configured to provide a driving force to the pinion gear.

3. The unmanned guidance terminal of claim 2, wherein the pinion gear includes a plurality of pinion gears arranged to be spaced apart from each other by a predetermined distance,
wherein the motor includes a motor gear meshed with one of the plurality of pinion gears.

4. The unmanned guidance terminal of claim 2, wherein the base further includes a base wall spaced apart from the rack gear by a predetermined distance and located on an outer circumference of the pinion gear,
wherein the main body includes:
a circular bottom plate having the rotator located on a bottom surface thereof, wherein the vertical frame and the controller are coupled to a top surface of the circular bottom plate; and
a bottom bracket located under the bottom plate and fastened to the base wall.

5. The unmanned guidance terminal of claim 1, wherein the display is a transparent display allowing light to pass therethrough,
wherein the controller is configured to:
output a guide for guiding a location of a place inquired by a user on one surface of the transparent display; and
operate the rotator such that a surface opposite to the one surface of the transparent display faces the place.

6. The unmanned guidance terminal of claim 5, further comprising a light outputter positioned on the main body and configured to indicate a location of the one surface of the transparent display.

7. The unmanned guidance terminal of claim 1, further comprising a sensor configured to sense a user adjacent to the unmanned guidance terminal,
wherein the controller is configured to control the rotator such that one surface of the display where a screen is output is oriented in a direction where the user is positioned.

8. The unmanned guidance terminal of claim 1, further comprising:
a circular power supply terminal positioned on the base; and
a brush terminal positioned on the main body and maintaining contact with the power supply terminal when the main body rotates,
wherein the controller is configured to receive power via the brush terminal.

9. The unmanned guidance terminal of claim 1, further comprising:
a linear actuator configured to move the display vertically along the vertical frame; and
a flexible cable positioned on the vertical frame and connecting the display with the controller.

10. The unmanned guidance terminal of claim 9, further comprising a cable reel configured to wind the flexible cable when the display descends to maintain tension on the flexible cable positioned on the vertical frame.

11. The unmanned guidance terminal of claim 9, further comprising a sensor configured to sense a user adjacent to the unmanned guidance terminal,
wherein the controller is configured to control the linear actuator to move the display to a location corresponding to a height or an eye location of the user sensed by the sensor.

12. The unmanned guidance terminal of claim 11, wherein the sensor is a camera module located upward of the display.

13. The unmanned guidance terminal of claim 9, wherein the vertical frame includes:
a first vertical frame located on one side of the display and having the linear actuator coupled thereto; and
a second vertical frame located on a side opposite to the one side of the display and having the flexible cable disposed thereon.

14. The unmanned guidance terminal of claim 9, wherein the vertical frame is located on one side of the display and has the linear actuator and the flexible cable disposed thereon.

15. The unmanned guidance terminal of claim 1, wherein the main body includes a main body cover having an inclined surface formed on a top surface thereof.

16. An unmanned guidance terminal comprising:
a main body;
a vertical frame extending upward from the main body;
a transparent display coupled to the vertical frame; and
a controller positioned on the main body and configured to control the transparent display to provide guidance information.

17. The unmanned guidance terminal of claim 16, wherein the controller is configured to output a guide for guiding a location of a place inquired by a user on one surface of the transparent display,
wherein the unmanned guidance terminal includes a light outputter positioned on the main body and configured to indicate a location of the one surface of the transparent display.

18. The unmanned guidance terminal of claim 16, further comprising a linear actuator configured to move the transparent display vertically along the vertical frame.

19. The unmanned guidance terminal of claim 18, further comprising a sensor configured to sense a user adjacent to the unmanned guidance terminal,
wherein the controller is configured to control the linear actuator to move the transparent display to a location corresponding to a height or an eye location of the user sensed by the sensor.

20. The unmanned guidance terminal of claim 16, further comprising:
a flexible cable positioned on the vertical frame and connecting the display with the controller; and
a cable reel configured to wind the flexible cable when the transparent display descends to maintain tension on the flexible cable positioned on the vertical frame.
